# EUROPEAN PATENT APPLICATION

(11) **EP 4 692 727 A1**
(43) Date of publication of application: **11.02.2026**
(21) Application number: 24778954.8
(22) Date of filing: 27.02.2024
(51) Int. Cl.: G01C 19/5684, B81B 3/00

(54) **VIBRATION GYRO ELEMENT AND GYROSCOPE**

(30) Priority: 29.03.2023 JP 2023054342
(71) Applicant: Sumitomo Precision Products Co., Ltd., Hyogo 660-0891 (JP)
(72) Inventor: UCHINO, Ryohei, Amagasaki-shi, Hyogo 660-0891 (JP); ARAKI, Ryuta, Amagasaki-shi, Hyogo 660-0891 (JP); JOKI, Masahiro, Amagasaki-shi, Hyogo 660-0891 (JP)
(74) Representative: Viering, Jentschura & Partner mbB Patent- und Rechtsanwälte
(86) International application number: PCT/JP2024/006970
(87) International publication number: WO 2024/202813

(57) **Abstract**

In a vibratory gyro element (100), patterns of wirings (70) and the number of bonding wires (80) provided on the wirings are adjusted such that resistance components of electrodes (40) and corresponding wirings to be interchanged with each other are matched to each other between switching units (170) and a vibrator (20).

## Description

### Technical Field

The present invention relates to a vibratory gyro element including a vibrator and electrodes, and a gyroscope including the same.

### Background Art

Conventionally, a gyroscope including a vibratory gyro element including a vibrator and electrodes is known. Such a gyroscope is disclosed in Japanese Patent Laid-Open No. 2009-115559, for example.

Japanese Patent Laid-Open No. 2009-115559 discloses a gyroscope including a vibratory gyro element. The vibratory gyro element includes a ring-shaped element portion (vibrator) and electrodes. A plurality of electrodes are arranged at a predetermined angular interval along a direction around the center of the element portion. The plurality of electrodes include a primary drive electrode that generates a primary vibration in the element portion, a primary detection electrode that detects the primary vibration, a secondary detection electrode that detects a secondary vibration of the element portion, and a secondary drive electrode that cancels out the secondary vibration. In the gyroscope, an angular velocity is calculated based on an AC voltage applied to the secondary drive electrode to cancel out the secondary vibration.

In a conventional gyroscope such as that described in Japanese Patent Laid-Open No. 2009-115559, the angular velocity detected by the gyroscope contains a bias component. The bias component, also called a zero point output or an offset, arises from various factors such as the asymmetry of a vibratory gyro element and the characteristics of a circuit. Therefore, in the gyroscope described in Patent Document 1, the primary drive electrode and the secondary drive electrode are interchanged, the primary detection electrode and the secondary detection electrode are interchanged, and the bias component is cancelled by acquiring a difference between output signals of the gyroscope before and after the electrode interchange.

### Prior Art

### Patent Document

Patent Document 1: Japanese Patent Laid-Open No. 2009-115559

### Summary of the Invention

### Problems to be Solved by the Invention

However, in the conventional gyroscope such as that described in Japanese Patent Laid-Open No. 2009-115559, even when a difference between output signals of the gyroscope before and after electrode interchange is acquired, the bias component may remain without being cancelled, as described below. Specifically, in the gyroscope such as that described in Patent Document 1, a bias component arises due to electrical crosstalk (unwanted inflow of an electrical signal due to electrical coupling) that corresponds to a resistance component of an electrode and a wiring corresponding to the electrode, but since the resistance component differs before and after electrode interchange, the magnitude of the bias component differs before and after electrode interchange. In such a case, even when the difference between the output signals before and after electrode interchange is acquired, the bias component due to electrical crosstalk corresponding to the resistance component remains uncanceled. Therefore, in a configuration in which electrode interchange is performed, it is desired to sufficiently cancel the bias component due to electrical crosstalk corresponding to the resistance component.

The present invention has been proposed in order to solve the aforementioned problems, and one object of the present invention is to provide a vibratory gyro element and a gyroscope capable of sufficiently canceling a bias component due to electrical crosstalk corresponding to a resistance component in a configuration in which interchange is performed.

### Means for Solving the Problems

In order to attain the aforementioned object, a vibratory gyro element according to a first aspect of the present invention includes a vibrator, a plurality of electrodes on the vibrator, and a plurality of wirings corresponding to the plurality of electrodes. The plurality of electrodes include a primary drive electrode to excite a primary vibration in the vibrator, a primary detection electrode to detect the primary vibration, a secondary detection electrode to detect a secondary vibration of the vibrator, and a secondary drive electrode to drive the vibrator to cancel out the secondary vibration. Furthermore, switching units are provided to interchange the primary drive electrode and a corresponding wiring and the secondary drive electrode and a corresponding wiring or the secondary detection electrode and a corresponding wiring with each other, and to interchange the primary detection electrode and a corresponding wiring and the secondary detection electrode and the corresponding wiring or the secondary drive electrode and the corresponding wiring with each other. Moreover, at least one of patterns of the wirings, a number of bonding wires provided on the wirings, or another electrical element that increases or decreases electrical resistance is adjusted such that resistance components of the electrodes and the corresponding wirings to be interchanged with each other are matched to each other between the switching units and the vibrator. In this specification, the term "the resistance components are matched" indicates a broader meaning including not only a case in which the resistance components are completely equal to each other, but also a case in which the resistance components are substantially equal to each other. Furthermore, in this specification, the term "between the switching units and the vibrator" indicates including all of the electrodes expected to perform functions of exciting the primary vibration in the vibrator, detecting the primary vibration, detecting the secondary vibration, and canceling out the secondary vibration on the vibrator after the switching units, and all of the wirings connected to perform the functions of the electrodes, and does not indicate including only a portion of them.

In the vibratory gyro element according to the first aspect of the present invention, as described above, at least one of the patterns of the wirings, the number of bonding wires provided on the wirings, or another electrical element that increases or decreases electrical resistance is adjusted such that the resistance components of the electrodes and the corresponding wirings to be interchanged with each other are matched to each other between the switching units and the vibrator. Accordingly, the resistance component of the electrodes that perform each function and the corresponding wiring can be matched before and after interchange, and thus a difference between bias components due to electrical crosstalk corresponding to the resistance components, which are superimposed on output signals before and after the interchange, can be reduced. Thus, when a difference between the output signals before and after interchange is acquired, the bias component due to electrical crosstalk corresponding to the resistance component can be sufficiently canceled. In addition, the accuracy of detecting an angular velocity can be improved in a gyroscope that includes the vibratory gyro element.

In the vibratory gyro element according to the first aspect, the number of bonding wires is preferably made same for the wirings to be interchanged with each other such that the resistance components of the electrodes and the corresponding wirings to be interchanged with each other are matched to each other between the switching units and the vibrator. The thicknesses of the bonding wires are different from those of the wirings, and thus the resistance values of the bonding wires are also different from those of the wirings. Even when the total distances of the wirings are the same, the resistance values may differ depending only on the presence or absence of the bonding wires. Therefore, by making the number of bonding wires the same for the wirings to be interchanged with each other as described above, the influence of providing the bonding wires due to the thicknesses can be reduced or prevented, and thus the resistance components of the electrodes and the corresponding wirings to be interchanged with each other can be easily matched to each other. In this specification, the term "the number is made the same for" indicates a concept that also includes making the number zero for.

In such a case, lengths of the bonding wires are preferably made same for the wirings to be interchanged with each other such that the resistance components of the electrodes and the corresponding wirings to be interchanged with each other are matched to each other between the switching units and the vibrator. Accordingly, the resistance components of the electrodes and the corresponding wirings to be interchanged with each other can be more easily matched to each other.

In the configuration in which the number of bonding wires is made the same for the wirings to be interchanged with each other, one of the bonding wires and the other of the bonding wires are preferably not parallel to each other or are preferably spaced apart from each other. Accordingly, unlike a case in which one bonding wire and another bonding wire are arranged parallel to and close to each other, the occurrence of mutual induction between one bonding wire and another bonding wire can be reduced or prevented, and thus the adverse effect of mutual induction between one bonding wire and another bonding wire on the output signal can be reduced or prevented.

In the vibratory gyro element according to the first aspect, switches are preferably provided on an inlet side and an outlet side as the switching unit configured to interchange each of the electrodes and the corresponding wiring, and the resistance components of the electrodes and the corresponding wirings to be interchanged with each other are preferably matched to each other between the switches on the inlet side and the outlet side. Accordingly, the resistance components can be matched between the inlet-side switches and the outlet-side switches, and thus the bias component due to electrical crosstalk corresponding to the resistance component can be sufficiently canceled.

In the vibratory gyro element according to the first aspect, in a configuration in which a plurality of electrodes configured to perform a same function are arranged in a plural number on the vibrator, the electrodes to be interchanged with each other are preferably provided in equal numbers, two or more, and connected in series by the wirings, and the resistance components of the electrodes and the corresponding wirings to be interchanged with each other are preferably matched to each other between the switching units and the vibrator to the extent that the electrodes are connected in series. Accordingly, due to the need to route the wiring connecting the plurality of electrodes together, the lengths of the wirings are likely to differ and become complex such that three-dimensional wirings using bonding wires may be required for detouring, or the resistance components may be designed to be different. Therefore, it is highly effective to match the resistance components of the electrodes and the corresponding wirings to be interchanged with each other.

In the vibratory gyro element according to the first aspect, sectional areas of the wirings to be interchanged with each other are preferably made same as each other such that the resistance components of the electrodes and the corresponding wirings to be interchanged with each other are matched to each other between the switching units and the vibrator. Accordingly, by effectively using the fact that the resistance component changes depending on the sectional area of the wiring, the resistance components of the electrodes and the corresponding wirings to be interchanged with each other can be easily matched to each other.

In such a case, widths of the wirings to be interchanged with each other are preferably made same as each other such that the sectional areas of the wirings to be interchanged with each other are made same as each other. Accordingly, by effectively using the fact that the sectional area changes depending on the width of the wiring, the sectional areas of the wirings to be interchanged with each other can be easily made the same as each other.

The vibratory gyro element according to the first aspect preferably further includes a fixed portion, and a support to connect the vibrator to the fixed portion and support the vibrator such that the vibrator is vibratable. The wirings are preferably provided on the fixed portion, the electrodes are preferably provided on the vibrator and the support, and the resistance components of the electrodes and the corresponding wirings to be interchanged with each other, which are provided on the vibrator, the fixed portion, and the support, are perferaly matched to each other between the switching units and the vibrator. Accordingly, the vibrator can be easily vibrated, and the resistance components of the electrodes and the corresponding wirings to be interchanged with each other can be matched to each other.

In order to attain the aforementioned object, a gyroscope according to a second aspect of the present invention includes a vibratory gyro element, and a calculator to calculate an angular velocity based on an output signal from the vibratory gyro element. The vibratory gyro element includes a vibrator, a plurality of electrodes on the vibrator, and a plurality of wirings corresponding to the plurality of electrodes. The plurality of electrodes include a primary drive electrode to excite a primary vibration in the vibrator, a primary detection electrode to detect the primary vibration, a secondary detection electrode to detect a secondary vibration of the vibrator, and a secondary drive electrode to drive the vibrator to cancel out the secondary vibration. Furthermore, switching units are provided to interchange the primary drive electrode and a corresponding wiring and the secondary drive electrode and a corresponding wiring or the secondary detection electrode and a corresponding wiring with each other, and to interchange the primary detection electrode and a corresponding wiring and the secondary detection electrode and the corresponding wiring or the secondary drive electrode and the corresponding wiring. Moreover, at least one of patterns of the wirings, a number of bonding wires provided on the wirings, or another electrical element that increases or decreases electrical resistance is adjusted such that resistance components of the electrodes and the corresponding wirings to be interchanged with each other are matched to each other between the switching units and the vibrator.

In the gyroscope according to the second aspect of the present invention, as described above, at least one of the patterns of the plurality of wirings, the number of bonding wires provided on the plurality of wirings, or another electrical element that increases or decreases electrical resistance is adjusted such that the resistance components of the wirings to be interchanged with each other are matched to each other between the switching units and the vibrator. Accordingly, the resistance component of the electrodes that perform each function and the corresponding wiring can be matched before and after interchange, and thus a difference between bias components due to electrical crosstalk corresponding to the resistance components, which are superimposed on output signals before and after the interchange, can be reduced. Thus, when a difference between the output signals before and after interchange is acquired, the bias component due to electrical crosstalk corresponding to the resistance component can be sufficiently canceled. In addition, the accuracy of detecting an angular velocity can be improved in a gyroscope that includes the vibratory gyro element.

### Advantageous Effect of the Invention

According to the present invention, as described above, it is possible to sufficiently cancel the bias component due to electrical crosstalk corresponding to the resistance component in the configuration in which interchange is performed.

### Brief Description of the Drawings

[FIG. 1] A plan view showing an entire vibratory gyro element according to an embodiment.
[FIG. 2] A sectional view taken along the line II-II in FIG. 1.
[FIG. 3] An enlarged view of a portion enclosed by a broken line in FIG. 1.
[FIG. 4] A block diagram showing a gyroscope according to the embodiment.
[FIG. 5] A diagram showing a primary vibration of a vibrator according to the embodiment.
[FIG. 6] A diagram showing a secondary vibration of the vibrator according to the embodiment.
[FIG. 7] A plan view showing the state of the vibratory gyro element before interchange according to the embodiment.
[FIG. 8] A plan view showing the state of the vibratory gyro element after interchange according to the embodiment.
[FIG. 9] A plan view showing the state of wirings of the vibratory gyro element according to the embodiment.
[FIG. 10] A partial enlarged view of FIG. 9.

### Modes for Carrying Out the Invention

An embodiment of the present invention is hereinafter described on the basis of the drawings.

### Configuration of Vibratory Gyro Element

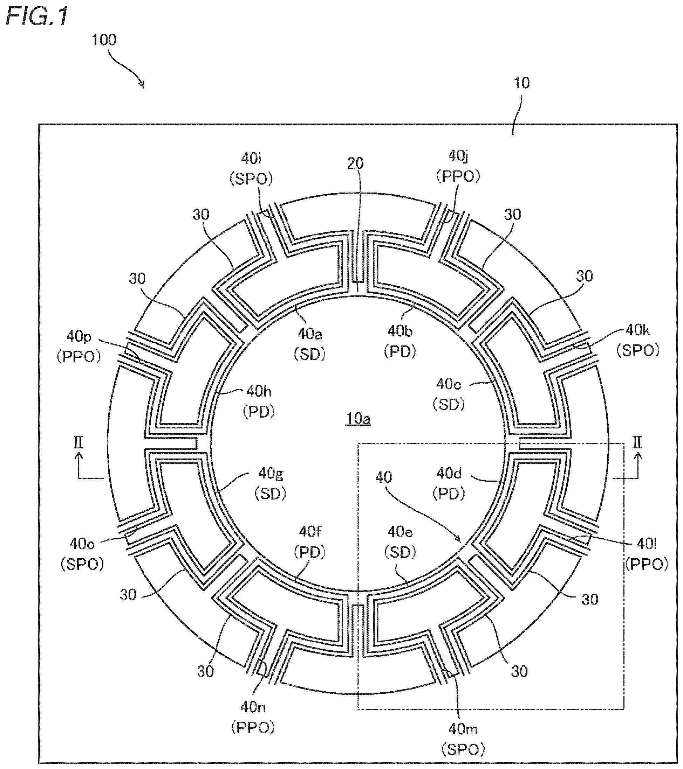

A vibratory gyro element 100 and a gyroscope 101 including the vibratory gyro element 100 according to the first embodiment are now described with reference to FIGS. 1 to 10.

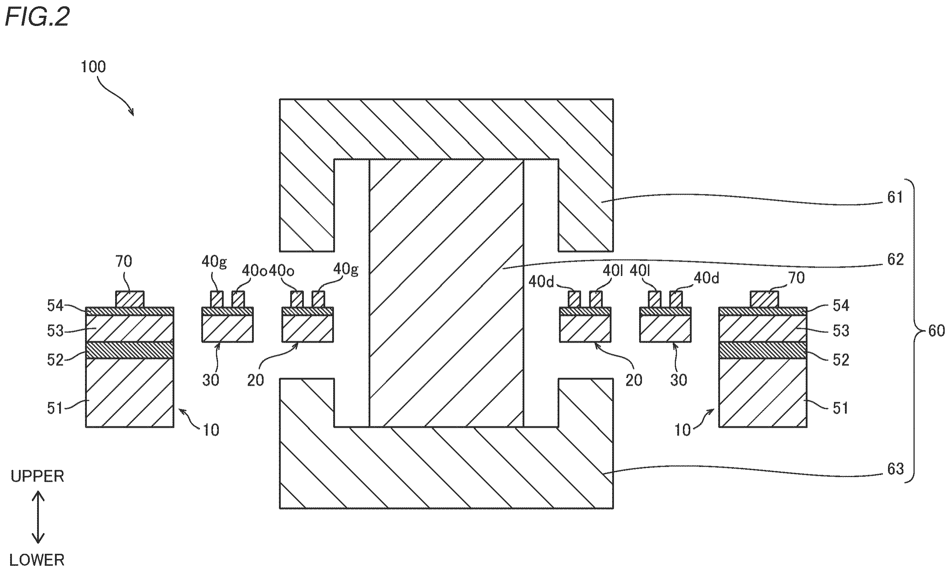

In the following description, the radial direction of a vibrator 20 may be referred to as the radial direction, the outer circumferential direction of the vibrator 20 may be referred to as the circumferential direction, and a direction intersecting with both the radial direction and the circumferential direction may be referred to as the axial direction. In addition, in the radial direction, the center side of the vibrator 20 may be referred to as the inside or inner side, and the outer circumferential side may be referred to as the outside or outer side. In the axial direction, the side on which an upper yoke 61 (see FIG. 2) is provided may be referred to as the upper or upper side, and the side on which a lower yoke 63 (see FIG. 2) is provided may be referred to as the lower or lower side. Furthermore, the upper surface of each component shown below may be referred to as the front surface, and the lower surface may be referred to as the back surface. Note that an extended imaginary line in the radial direction does not necessarily have to intersect with the center of the vibrator 20. The circumferential direction is not necessarily a curve with a constant curvature.

One primary drive electrode and a plurality of primary drive electrodes may be collectively referred to as the primary drive electrode PD, and one primary detection electrode and a plurality of primary detection electrodes may be collectively referred to as the primary detection electrode PPO. Similarly, one secondary drive electrode and a plurality of secondary drive electrodes may be collectively referred to as the secondary drive electrode SD, and one secondary detection electrode and a plurality of secondary detection electrodes may be collectively referred to as the secondary detection electrode SPO.

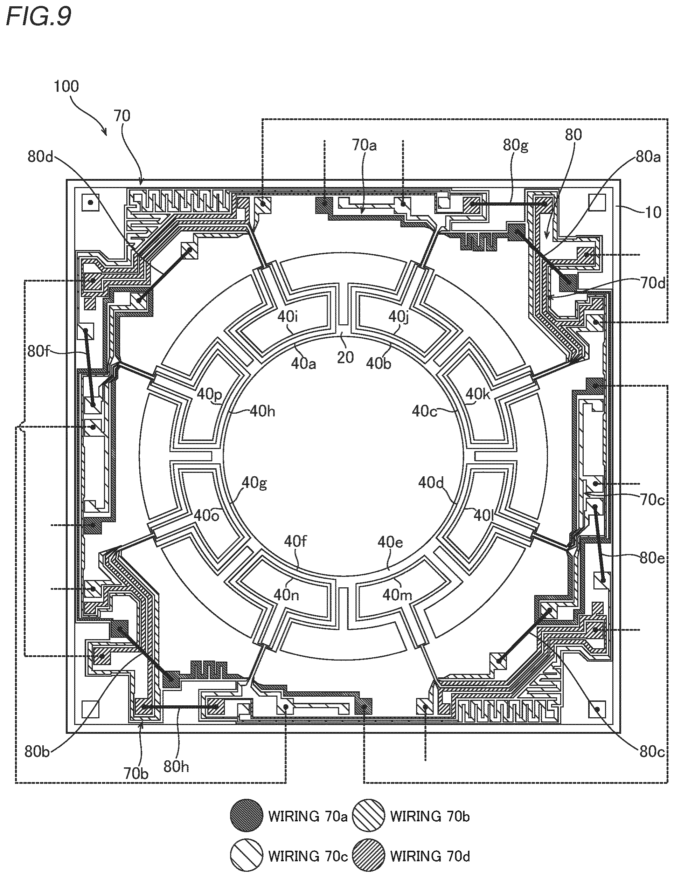

As shown in FIGS. 1 and 2, the vibratory gyro element 100 includes a fixed portion 10, the vibrator 20, a plurality of supports 30, a plurality of electrodes 40a to 40p, a magnetic field applier 60, and a plurality of wirings 70 (see FIG. 9). The vibratory gyro element 100 is an electromagnetically driven vibratory gyro element that includes a magnetic field applier 60.

As shown in FIG. 1, the fixed portion 10 includes an opening 10a in the center. Inside the opening 10a, the vibrator 20, the plurality of supports 30, the plurality of electrodes 40a to 40p, and the magnetic field applier 60 (see Fig. 2) are arranged. As shown in FIG. 2, the fixed portion 10 is a member having a laminated structure in which a first silicon layer 51, a silicon oxide layer (insulating layer) 52, and a second silicon layer 53 are laminated in this order. A silicon oxide film (insulating layer) 54 is formed on the front surface of the second silicon layer 53. Furthermore, the plurality of wirings 70 are formed on the front surface of the silicon oxide film 54.

The vibrator 20 is a ring-shaped (annular) member obtained by processing the second silicon layer 53, and has a vibration mode of cos Nθ. In the case of the vibrator 20 with N = 2 shown in FIG. 1, a primary vibration in a cos 2θ mode is excited.

The supports 30 are members obtained by processing the second silicon layer 53 and are formed integrally with the vibrator 20. The supports 30 connect the vibrator 20 to the fixed portion 10 and supports the vibrator 20 in a cantilever manner. That is, the supports 30 support the vibrator 20 such that the vibrator 20 is vibratable.

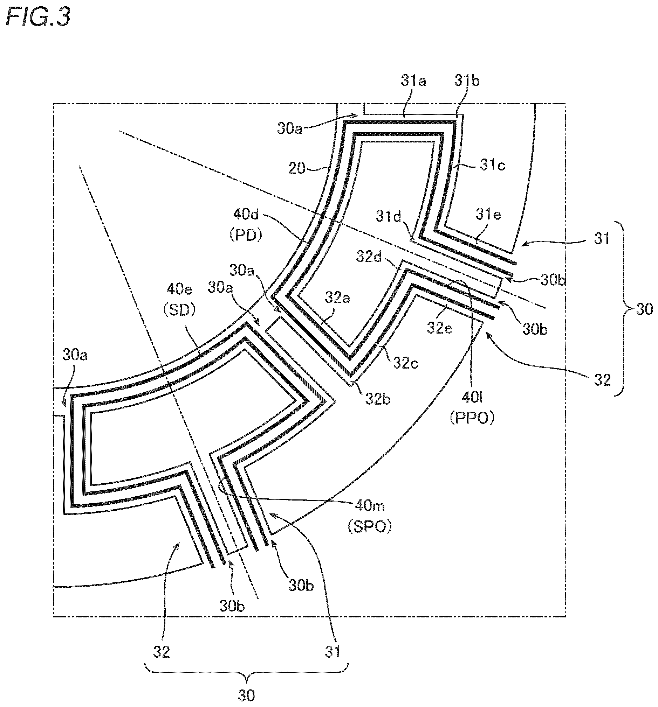

As shown in FIG. 3, each of the plurality of supports 30 includes a first leg 31 and a second leg 32. Each of the first leg 31 and the second leg 32 includes a first end 30a and a second end 30b. The first ends 30a (two first ends 30a) of the first leg 31 and the second leg 32 are respectively connected to different positions of the vibrator 20 with a first interval. The second ends 30b (two second ends 30b) of the first leg 31 and the second leg 32 are respectively connected to different positions of the fixed portion 10 with a second interval narrower than the first interval.

The first leg 31 includes a first portion 31a extending from the first end 30a to the outside of the vibrator 20 in the radial direction, and a second portion 31c bent at a first inflection portion 31b that is one end of the first portion 31a and extending parallel to the outer circumference of the vibrator 20. The first leg 31 also includes a third portion 31e bent at a second inflection portion 31d that is one end of the second portion 31c and extending to the outside of the vibrator 20 in the radial direction to reach the second end 30b.

Similarly, the second leg 32 includes a first portion 32a extending from the first end 30a to the outside of the vibrator 20 in the radial direction, and a second portion 32c bent at a first inflection portion 32b that is one end of the first portion 32a and extending parallel to the outer circumference of the vibrator 20. The second leg 32 also includes a third portion 32e bent at a second inflection portion 32d that is one end of the second portion 32c and extending to the outside of the vibrator 20 in the radial direction to reach the second end 30b.

The second portion 31c of the first leg 31 and the second portion 32c of the second leg 32 extend to the second inflection portions 31d and 32d so as to approach each other, respectively. The third portion 31e of the first leg 31 and the third portion 32e of the second leg 32 extend in parallel from the second inflection portions 31d and 32d to the second ends 30b with a predetermined gap therebetween, respectively. The first leg 31 and the second leg 32 are arranged symmetrically with respect to an imaginary line passing through the center of the vibrator 20 and between the third portions 31e and 32e.

Each of the electrodes 40a to 40p is a conductive member formed in a loop shape on the front surface of the vibrator 20. Each of the electrodes 40a to 40p extends from the vibrator 20 to the support 30. For example, as shown in FIG. 3, the electrode 40d extends from the second end 30b of the first leg 31 to the second end 30b of the second leg 32 through the first leg 31, the vibrator 20 between the first ends 30a, and the second leg 32. The electrode 40d is formed on the front surface of the silicon oxide film 54. The electrodes 40a to 40c and 40e to 40p other than the electrode 40d are similar to the electrode 40d. In the following description, the electrodes 40a to 40p may be collectively referred to as the electrodes 40 when not specifically focusing on their arrangements or functions.

The electrodes 40 are arranged in rows on the front surface of the vibrator 20 while being spaced apart from each other in the circumferential direction of the vibrator 20. A plurality of electrodes 40 extend in parallel in a plurality of rows (two rows in this embodiment) on the front surface of the vibrator 20 while being spaced apart from each other in the circumferential direction of the vibrator 20. The electrodes 40 include the primary drive electrode PD that excites a primary vibration in the cos 2θ mode in the vibrator 20, the primary detection electrode PPO that detects the primary vibration, the secondary detection electrode SPO that detects the secondary vibration of the vibrator 20, and the secondary drive electrode SD that drives the vibrator 20 to cancel out the secondary vibration. In the row of the plurality of electrodes 40 arranged on the front surface of the vibrator 20 in at least one row (two rows in this embodiment) along the circumferential direction of the vibrator 20, one or more (four in this embodiment) primary drive electrodes PD, one or more (four in this embodiment) primary detection electrodes PPO, one or more (four in this embodiment) secondary detection electrodes SPO, and one or more (four in this embodiment) secondary drive electrodes SD are included.

As shown in FIGS. 1 and 3, two electrodes 40 extend in parallel with a gap therebetween on the front surfaces of the support 30 and the vibrator 20. For example, as shown in FIG. 3, two electrodes 40d and 40l extend in parallel with a gap therebetween on the front surfaces of the support 30 and the vibrator 20. In this specification, the term "parallel" includes not only cases in which two members are arranged parallel to each other, but also cases in which two members are spaced apart such that they do not touch or intersect each other.

In FIG. 3, among the two electrodes 40d and 40l that are provided on the front surface of one support 30 and loop in parallel, the electrode 40d arranged on the outer side is the primary drive electrode PD, and the electrode 40l arranged on the inner side is the primary detection electrode PPO. Among the two electrodes 40e and 40m that are provided on the front surface of the other support 30 and loop in parallel, the electrode 40e arranged on the outer side is the secondary drive electrode SD, and the electrode 40m arranged on the inner side is the secondary detection electrode SPO. That is, the primary drive electrode PD and the primary detection electrode PPO are arranged in the same orientation, and the secondary drive electrode SD and the secondary detection electrode SPO are arranged in the same orientation.

As shown in FIG. 1, the primary drive electrodes PD and the secondary drive electrodes SD are alternately arranged in the same row, and the primary detection electrodes PPO and the secondary detection electrodes SPO are alternately arranged in the same row. That is, a set of the primary drive electrode PD and the primary detection electrode PPO and a set of the secondary drive electrode SD and the secondary detection electrode SPO are alternately arranged along the circumferential direction. Furthermore, the number of sets of the primary drive electrode PD and the primary detection electrode PPO is the same as the number of sets of the secondary drive electrode SD and the secondary detection electrode SPO.

A set of the primary drive electrode PD and the primary detection electrode PPO and a set of the primary drive electrode PD and the primary detection electrode PPO closest to it are arranged at positions 90 degrees apart from each other. A set of the secondary drive electrode SD and the secondary detection electrode SPO and a set of the secondary drive electrode SD and the secondary detection electrode SPO closest to it are arranged at positions 90 degrees apart from each other. A set of the primary drive electrode PD and the primary detection electrode PPO and a set of the secondary drive electrode SD and the secondary detection electrode SPO closest to it are arranged at positions 45 degrees apart from each other. Four primary drive electrodes PD, four primary detection electrodes PPO, four secondary drive electrodes SD, and four secondary detection electrodes SPO are provided.

The four primary drive electrodes PD are electrically connected in series. The four primary detection electrodes PPO are electrically connected in series. The four secondary drive electrodes SD are electrically connected in series. The four secondary detection electrodes SPO are electrically connected in series.

As shown in FIG. 2, the magnetic field applier 60 includes the upper yoke 61, a magnet 62, and the lower yoke 63. The upper yoke 61 and the lower yoke 63 are bottomed cylindrical members made of a magnetic material such as iron. The upper yoke 61 and the lower yoke 63 are arranged such that a cylindrical portion of the upper yoke 61 and a cylindrical portion of the lower yoke 63 face each other with a gap in the axial direction. In addition, the vibrator 20 is arranged between the cylindrical portion of the upper yoke 61 and the cylindrical portion of the lower yoke 63. The vibrator 20 is arranged between the cylindrical portion of the upper yoke 61 and the cylindrical portion of the lower yoke 63 with gaps in the axial direction from the respective cylindrical portions. The magnetic field applier 60 is not shown in FIGS. 1 and 3.

One of upper and lower portions of the magnet 62 is an N pole, and the other is an S pole. The magnet 62 is held by the upper yoke 61 or the lower yoke 63, or both the upper yoke 61 and the lower yoke 63 and is fixedly arranged radially inside the vibrator 20.

Magnetic flux flowing from one magnetic pole of the magnet 62 passes through one of the upper yoke 61 and the lower yoke 63, and reaches the vibrator 20 and the electrodes 40a to 40p formed on the front surface thereof. Furthermore, the magnetic flux passes through the vibrator 20 and the electrodes 40a to 40p, and flows into the other magnetic pole of the magnet 62 via the other of the upper yoke 61 and the lower yoke 63.

Thus, the magnetic field applier 60 applies a magnetic field to the plurality of electrodes 40a to 40p in a direction (in this case, the axial direction) that intersects with the front surface of the vibrator 20. The magnetic field applier 60 is supported by a support substrate (not shown) to maintain its radial and axial positions relative to the vibrator 20.

The plurality of wirings 70 are provided corresponding to the plurality of electrodes 40a to 40p. The plurality of wirings 70 are provided on the fixed portion 10. The plurality of wirings 70 are not shown in FIGS. 1 and 3. The plurality of wirings 70 are described below in detail.

The vibratory gyro element 100 excluding the magnetic field applier 60 is, for example, a micro electro mechanical systems (MEMS) element obtained by processing a known silicon on insulator (SOI) substrate using micromachining technology that applies semiconductor microfabrication technology.

This MEMS element is formed, for example, as follows: An SOI substrate including the first silicon layer 51, the silicon oxide layer 52, and the second silicon layer 53 is thermally oxidized to form the silicon oxide film 54 on the front surface of the second silicon layer 53.

Next, a mask pattern (not shown) is used to form the plurality of electrodes 40a to 40p and the plurality of wirings 70 on the front surface of the silicon oxide film 54. For example, the plurality of electrodes 40a to 40p and the plurality of wirings 70 are formed by depositing a film of a conductive material such as aluminum on the front surface of the silicon oxide film 54 through the mask pattern.

Using another mask pattern (not shown), the silicon oxide film 54 and the second silicon layer 53 are etched and removed down to the silicon oxide layer 52. Through this process, the base shapes of the supports 30 and the vibrator 20 are formed.

Next, with the front surfaces of the electrodes 40a to 40p, the supports 30, and the vibrator 20 protected by wax or the like, the first silicon layer 51 located below the supports 30 and the vibrator 20 is etched and removed using a mask pattern (not shown) that corresponds to the opening 10a of the fixed portion 10. Furthermore, the silicon oxide layer 52 is etched and removed using the same mask pattern to obtain the MEMS element described above.

The etching of the first silicon layer 51 and the silicon oxide layer 52 may be performed by dry etching or wet etching. In either case, however, it is preferable to use an etchant having high etching selectivity with respect to a layer that serves as a base of an etching layer.

### Configuration of Gyroscope

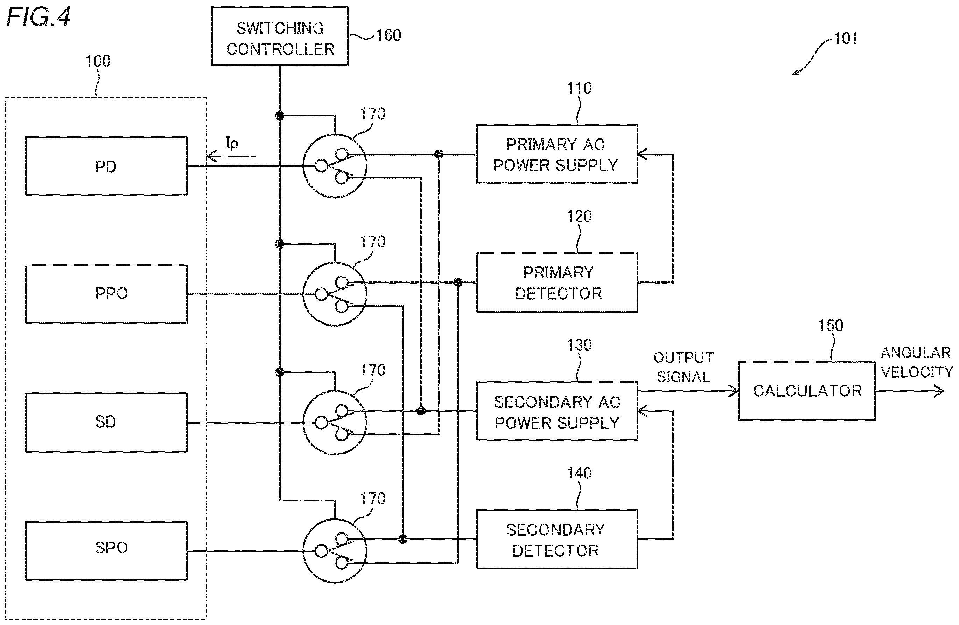

The gyroscope 101 including the vibratory gyro element 100 is now described with reference to FIG. 4. For the convenience of illustration, in FIG. 4, only the primary drive electrode PD, the primary detection electrode PPO, the secondary drive electrode SD, and the secondary detection electrode SPO of the vibratory gyro element 100 are illustrated in a simplified manner.

As shown in FIG. 4, the gyroscope 101 includes the vibratory gyro element 100, a primary AC power supply 110, a primary detector 120, a secondary AC power supply 130, a secondary detector 140, a calculator 150, a switching controller 160, and a plurality of switches 170.

The primary AC power supply 110 is electrically connected to the four primary drive electrodes PD connected in series. The primary detector 120 is electrically connected to the four primary detection electrodes PPO connected in series. The secondary AC power supply 130 is electrically connected to the four secondary drive electrodes SD connected in series. The secondary detector 140 is electrically connected to the four secondary detection electrodes SPO connected in series. In addition, the calculator 150 is electrically connected to the secondary AC power supply 130.

The operation of the gyroscope 101 is now described below.

When an AC current Ip is supplied from the primary AC power supply 110 to the primary drive electrode PD, a Lorentz force is applied to the primary drive electrode PD in a direction intersecting with the direction of the magnetic field applied from the magnetic field applier 60 and a direction in which the AC current Ip flows. That is, the Lorentz force acts in a direction parallel to the front surface of the vibrator 20. The vibrator 20 including the primary drive electrode PD is deformed by receiving this Lorentz force. In addition, the direction of the Lorentz force is periodically reversed depending on the frequency of the AC current Ip, and thus the vibrator 20 vibrates at the same frequency. In such a case, the vibrator 20 vibrates in a direction parallel to its front surface.

By setting the frequency of the AC current Ip to match the resonant frequency of the vibrator 20, the primary vibration in the cos 2θ mode is excited in the vibrator 20.

The AC current Ip is flowed to each of the four primary drive electrodes PD so as to excite the primary vibration in the cos 2θ mode in the vibrator 20. Specifically, the AC current Ip is set to flow in opposite directions, i.e. in clockwise and counterclockwise directions as viewed from above, between two primary drive electrodes PD positioned 90 degrees apart from each other.

The primary detection electrode PPO detects the primary vibration and generates a voltage signal having a magnitude corresponding to the amplitude of the primary vibration. This voltage signal is fed back to the primary detector 120. The primary detector 120 outputs an output signal to the primary AC power supply 110 based on the voltage signal generated by the primary detection electrode PPO. Based on the output signal from the primary detector 120, the primary AC power supply 110, specifically, the amplitude and frequency of the AC current Ip, is controlled such that the vibration frequency and amplitude of the vibrator 20 are constant.

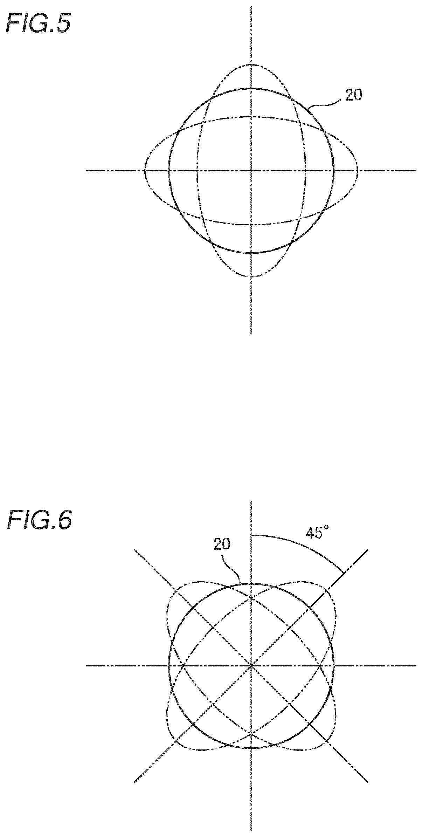

As shown in FIG. 5, the annular vibrator 20 periodically undergoes the primary vibration so as to form an ellipse having mutually perpendicular principal axes. Meanwhile, when an angular velocity is applied to the vibrator 20, a Coriolis force is generated, and thus a new vibration is excited by the Coriolis force in a direction of 45 degrees from the principal axis of the primary vibration shown in FIG. 5. This vibration is called a secondary vibration, and its vibration state is shown in FIG. 6.

A magnetic field is also applied to the secondary detection electrode SPO in a direction intersecting with its front surface. In response to the vibration of the vibrator 20, the secondary detection electrode SPO also vibrates in a direction parallel to its front surface. Consequently, a sinusoidal AC voltage is generated in the secondary detection electrode SPO according to the strength of the magnetic field and the moving speed during vibration. The voltage detected by the secondary detection electrode SPO is proportional to the magnitude of the secondary vibration excited by the Coriolis force, and thus the generated voltage also differs depending on the magnitude of the applied angular velocity.

The secondary detector 140 detects the voltage generated in the secondary detection electrode SPO, and outputs an output signal corresponding to the magnitude of this voltage to the secondary AC power supply 130.

The output signal from the secondary detector 140 is input to the secondary AC power supply 130. Based on this output signal, the secondary AC power supply 130 supplies an AC current to the secondary drive electrode SD to cancel out the secondary vibration generated in the vibrator 20 so as to reduce or prevent the secondary vibration. In other words, a feedback control is performed such that the output of the secondary detection electrode SPO becomes zero. The secondary AC power supply 130 also inputs an output signal based on the output current to the calculator 150.

The force due to the output of the secondary AC power supply 130 and the Coriolis force generated by the angular velocity are equal, and thus the calculator 150 can calculate the angular velocity based on the output signal of the secondary AC power supply 130.

The vibratory gyro element 100 is configured to be able to interchange the primary drive electrode PD and its wiring 70 and the secondary drive electrode SD and its wiring 70 with each other, and to interchange the primary detection electrode PPO and its wiring 70 and the secondary detection electrode SPO and its wiring 70 with each other. The gyroscope 101 performs interchange at the predetermined timing, acquires output signals from the vibratory gyro element 100 before and after the interchange, and calculates the angular velocity based on the output signals with the calculator 150. For example, the calculator 150 calculates the angular velocity based on a difference between the output signals before and after the interchange. This interchange is performed by switching internal connections using the switches 170 and the switching controller 160 shown in FIG. 4. One switch 170 is provided for each the primary drive electrode PD, the secondary drive electrode SD, the primary detection electrode PPO, and the secondary detection electrode SPO. As the "predetermined timing", a case in which the vibratory gyro element 100 is in a stationary state or in a constant velocity motion state, or a case in which there is another gyroscope that can measure and interpolate motion during switching is selected, for example. The switches 170 are examples of a "switching unit" in the claims.

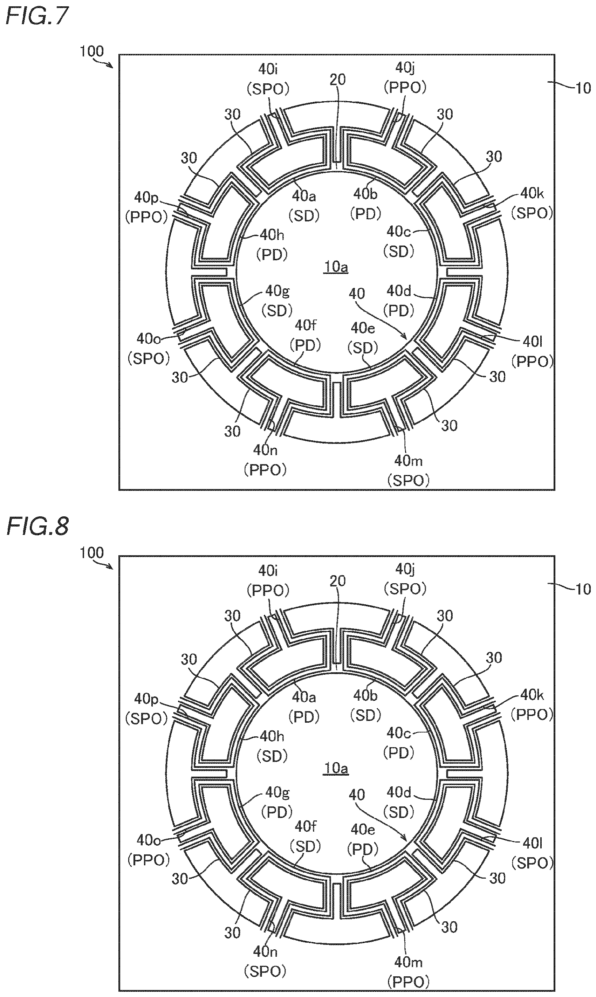

The electrode arrangement shown in FIG. 7 is the electrode arrangement before interchange, and is the same as that shown in FIG. 1. That is, the electrodes 40b, 40d, 40f, and 40h are electrically connected to the primary AC power supply 110 and function as the primary drive electrode PD. The electrodes 40j, 40l, 40n, and 40p are electrically connected to the primary detector 120 and function as the primary detection electrode PPO. The electrodes 40a, 40c, 40e, and 40g are electrically connected to the secondary AC power supply 130 and function as the secondary drive electrode SD. The electrodes 40i, 40k, 40m, and 40o are electrically connected to the secondary detector 140 and function as the secondary detection electrode SPO. At this time, a wiring 70a, which is described below, is electrically connected to the primary AC power supply 110. A wiring 70c, which is described below, is electrically connected to the primary detector 120. A wiring 70b, which is described below, is electrically connected to the secondary AC power supply 130. Furthermore, a wiring 70d, which is described below, is electrically connected to the secondary detector 140.

At the predetermined timing, the switching controller 160 transmits control signals to the four switches 170 such that the internal wiring of the gyroscope 101 is switched. Consequently, the electrode arrangement is switched to the electrode arrangement after interchange shown in FIG. 8. Specifically, the electrodes 40b, 40d, 40f, and 40h are electrically connected to the secondary AC power supply 130 and function as the secondary drive electrode SD. Similarly, the electrodes 40j, 40l, 40n, and 40p are electrically connected to the secondary detector 140 and function as the secondary detection electrode SPO. The electrodes 40a, 40c, 40e, and 40g are connected to the primary AC power supply 110 and function as the primary drive electrode PD. The electrodes 40i, 40k, 40m, and 40o are connected to the primary detector 120 and function as the primary detection electrode PPO. At this time, the wiring 70a described below is electrically connected to the secondary AC power supply 130. The wiring 70c described below is electrically connected to the secondary detector 140. The wiring 70b, which is described below, is electrically connected to the primary AC power supply 110. The wiring 70d, which is described below, is electrically connected to the primary detector 120.

The vibratory gyro element 100, the primary AC power supply 110, the primary detector 120, the secondary AC power supply 130, the secondary detector 140, and the calculator 150 may be mounted on different substrates, or may be mounted on the same substrate. The vibratory gyro element 100, the primary AC power supply 110, the primary detector 120, the secondary AC power supply 130, the secondary detector 140, and the calculator 150 may be housed in different packages (not shown). The vibratory gyro element 100 and the other components may be mounted on different substrates or housed in different packages. In such a case, the primary AC power supply 110 and the secondary AC power supply 130 may be mounted on yet another substrate or housed in yet another package.

### Wiring Configuration

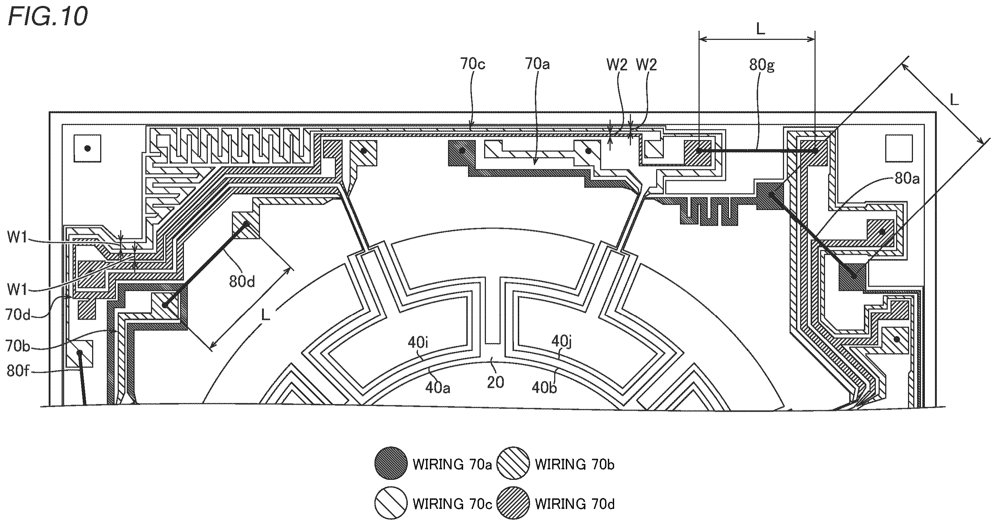

As shown in FIG. 9, the plurality of wirings 70 include wirings 70a, 70b, 70c, and 70d. Each of the wirings 70a to 70d includes bonding wires 80. The wirings 70a and 70b are wirings that are to be interchanged with each other. The wirings 70c and 70d are wirings that are to be interchanged with each other. In FIGS. 9 and 10, for ease of understanding, the wirings 70a, 70b, 70c, and 70d are hatched differently from each other.

The wiring 70a is provided corresponding to the electrodes 40b, 40d, 40f, and 40h, and connects the electrodes 40b, 40d, 40f, and 40h in series with each other. The wiring 70a includes a portion connecting a circuit on the substrate side on which the vibratory gyro element 100 is mounted (and thus the primary AC power supply 110 or the secondary AC power supply 130) to the electrode 40b, a portion connecting the electrode 40b to the electrode 40d, a portion connecting the electrode 40d to the electrode 40f via the circuit on the substrate side, a portion connecting the electrode 40f to the electrode 40h, and a portion connecting the electrode 40h to the circuit on the substrate side (and thus the primary AC power supply 110 or the secondary AC power supply 130). In addition, the wiring 70a includes two bonding wires 80a and 80b. Specifically, the bonding wire 80a is provided in a portion of the wiring 70a between the electrodes 40b and 40d. The bonding wire 80b is provided in a portion of the wiring 70a between the electrodes 40f and 40h.

The wiring 70b is provided corresponding to the electrodes 40a, 40c, 40e, and 40g, and connects the electrodes 40a, 40c, 40e, and 40g in series with each other. The wiring 70b includes a portion connecting the circuit on the substrate side (and thus the primary AC power supply 110 or the secondary AC power supply 130) to the electrode 40e, a portion connecting the electrode 40e to the electrode 40c, a portion connecting the electrode 40c to the electrode 40a via the circuit on the substrate side, a portion connecting the electrode 40a to the electrode 40g, and a portion connecting the electrode 40g to the circuit on the substrate side (and thus the primary AC power supply 110 or the secondary AC power supply 130). In addition, the wiring 70b includes two bonding wires 80c and 80d. Specifically, the bonding wire 80c is provided in a portion of the wiring 70b between the electrodes 40e and 40c. The bonding wire 80d is provided in a portion of the wiring 70b between the electrodes 40a and 40g.

The wiring 70c is provided corresponding to the electrodes 40j, 40l, 40n, and 40p, and connects the electrodes 40j, 40l, 40n, and 40p in series with each other. The wiring 70c includes a portion connecting a circuit on the substrate side (and thus the primary detector 120 or the secondary detector 140) to the electrode 40l, a portion connecting the electrode 40l to the electrode 40n, a portion connecting the electrode 40n to the electrode 40p via the circuit on the substrate side, a portion connecting the electrode 40p to the electrode 40j, and a portion connecting the electrode 40j to the circuit on the substrate side (and thus the primary detector 120 or the secondary detector 140). In addition, the wiring 70c includes two bonding wires 80e and 80f. Specifically, the bonding wire 80e is provided in a portion of the wiring 70c between the electrodes 40l and 40n. The bonding wire 80f is provided in a portion of the wiring 70c between the electrodes 40p and 40j.

The wiring 70d is provided corresponding to the electrodes 40i, 40k, 40m, and 40o, and connects the electrodes 40i, 40k, 40m, and 40o in series with each other. The wiring 70d includes a portion connecting the circuit on the substrate side (and thus the primary detector 120 or the secondary detector 140) to the electrode 40k, a portion connecting the electrode 40k to the electrode 40i, a portion connecting the electrode 40i to the electrode 40o via the circuit on the substrate side, a portion connecting the electrode 40o to the electrode 40m, and a portion connecting the electrode 40m to the circuit on the substrate side (and thus the primary detector 120 or the secondary detector 140). In addition, the wiring 70d includes two bonding wires 80g and 80h. Specifically, the bonding wire 80g is provided in a portion of the wiring 70d between the electrodes 40k and 40i. The bonding wire 80h is provided in a portion of the wiring 70d between the electrodes 40o and 40m.

In this embodiment, the vibratory gyro element 100 adjusts the patterns of the wirings 70 on the fixed portion 10 and the number of bonding wires 80 provided on the wirings 70 to match resistance components of the electrodes 40 and the corresponding wirings 70 to be interchanged with each other between the switches 170 and the vibrator 20. The resistance components of the electrodes 40 and the corresponding wirings 70 refer to the electrical resistance values of the electrodes 40 and the corresponding wirings 70. The resistance components of the electrodes 40 and the corresponding wirings 70 are smaller as the sectional areas of the electrodes 40 and the corresponding wirings 70 are larger, and are larger as the lengths of the electrodes 40 and the corresponding wirings 70 are larger.

In this embodiment, the resistance components of the electrodes 40 and the corresponding wirings 70 to be interchanged with each other are matched to each other between the switches 170 and the vibrator 20 to the extent that the electrodes 40 are connected in series. In this embodiment, the resistance components of the electrodes 40 and the corresponding wirings 70 to be interchanged with each other, which are provided on the vibrator 20, the fixed portion 10, and the supports 30, are matched to each other between the switches 170 and the vibrator 20.

In this embodiment, the number of bonding wires 80 is made the same for the wirings 70a and 70b to be interchanged with each other and for the wirings 70c and 70d to be interchanged with each other such that the resistance components of the electrodes 40 and the corresponding wirings 70 to be interchanged with each other are matched to each other between the switches 170 and the vibrator 20. Specifically, two bonding wires 80 (80a to 80d) are provided for each of the wirings 70a and 70b to be interchanged with each other. Also, two bonding wires 80 (80e to 80h) are provided for each of the wirings 70c and 70d to be interchanged with each other.

In this embodiment, as shown in FIGS. 9 and 10, the lengths of the bonding wires 80 are made the same for the wirings 70a and 70b to be interchanged with each other and for the wirings 70c and 70d to be interchanged with each other such that the resistance components of the electrodes 40 and the corresponding wirings 70 to be interchanged with each other are matched to each other between the switches 170 and the vibrator 20. That is, each of the bonding wires 80a to 80d corresponding to the wirings 70a and 70b has the same length L. Each of the bonding wires 80e to 80h corresponding to the wirings 70c and 70d has the same length L. All of the plurality of bonding wires 80 have the same length L. Furthermore, all of the plurality of bonding wires 80 have the same width (diameter). In FIG. 10, for convenience, only the bonding wires 80a, 80d, and 80g are illustrated with the length L.

In this embodiment, one bonding wire 80 is not parallel to the other bonding wires 80 or is spaced apart from the other bonding wires 80. For example, the bonding wire 80a is not parallel to each of the other bonding wires 80b to 80h or is spaced apart from each of the other bonding wires 80b to 80h. In particular, the bonding wire 80a and the bonding wire 80g closest to the bonding wire 80a are not parallel to each other and are spaced apart from each other. Although the bonding wire 80a has been described, the same applies to the bonding wires 80b to 80h.

In this embodiment, the sectional areas of the wirings 70a and 70b to be interchanged with each other are made the same as each other, and the sectional areas of the wirings 70c and 70d to be interchanged with each other are made the same as each other such that the resistance components of the electrodes 40 and the corresponding wirings 70 to be interchanged with each other are matched to each other between the switches 170 and the vibrator 20. Specifically, the widths of the wirings 70a and 70b to be interchanged with each other are made the same as each other, and the widths of the wirings 70c and 70d to be interchanged with each other are made the same as each other such that the sectional areas of the wirings 70a and 70b to be interchanged with each other are made the same as each other, and the sectional areas of the wirings 70c and 70d to be interchanged with each other are made the same as each other.

Each of the wirings 70a, 70b, 70c, and 70d includes a wide portion and a narrow portion. The wide portion has a width W1 (see FIG. 10), and the narrow portion has a width W2 (see FIG. 10) that is smaller than the width W1. That is, the widths of the wirings 70a and 70b to be interchanged with each other are made the same as each other, and the widths of the wirings 70c and 70d to be interchanged with each other are made the same as each other. Furthermore, the widths of the wirings 70a and 70b to be interchanged with each other are made the same as each other, and the widths of the wirings 70c and 70d to be interchanged with each other are made the same as each other such that processing errors due to a manufacturing process occurring when the wirings 70a, 70b, 70c, and 70d are formed on the fixed portion 10 can be adjusted. This reduces variations in resistance components due to processing errors such that the resistance components of the wirings 70a and 70b to be interchanged with each other can be easily matched, and the resistance components of the wirings 70c and 70d to be interchanged with each other can be easily matched. In FIG. 10, for convenience, only the widths W1 and W2 of the wirings 70c and 70d are illustrated.

The lengths and widths of the wirings 70a and 70b to be interchanged with each other are adjusted, and the lengths and widths of the wirings 70c and 70d to be interchanged with each other are adjusted such that the resistance components of the wirings 70a and 70b to be interchanged with each other are matched between the switches 170 and the vibrator 20, and the resistance components of the wirings 70c and 70d to be interchanged with each other are matched to each other between the switches 170 and the vibrator 20. Specifically, the lengths and widths of the wirings 70a and 70b to be interchanged with each other are adjusted, and the lengths and widths of the wirings 70c and 70d to be interchanged with each other are adjusted such that values obtained by dividing the lengths by the sectional areas of the wirings 70a and 70b to be interchanged with each other are matched, and values obtained by dividing the lengths by the sectional areas of the wirings 70c and 70d to be interchanged with each other are matched. The resistivities of the wirings 70a, 70b, 70c, and 70d are the same as each other, and thus the values obtained by dividing the lengths by the sectional areas of the wirings 70a and 70b to be interchanged with each other are matched, and the values obtained by dividing the lengths by the sectional areas of the wirings 70c and 70d to be interchanged with each other are matched such that the resistance components of the wirings 70a and 70b to be interchanged with each other can be matched, and the resistance components of the wirings 70c and 70d to be interchanged with each other can be matched to each other. The wirings 70a, 70b, 70c, and 70d have the same thickness. The thickness (1 µm, for example) of each of the wirings 70a, 70b, 70c, and 70d is sufficiently smaller than the width (30 µm, for example) of each of the bonding wires 80. That is, the wirings 70a, 70b, 70c, and 70d each have a smaller sectional area than that of each of the bonding wires 80.

The resistance components of the electrodes 40 to be interchanged with each other are matched to each other between the switches 170 and the vibrator 20. The electrodes 40 to be interchanged with each other refer to the electrodes 40b, 40d, 40f, and 40h and the electrodes 40a, 40c, 40e, and 40g, and the electrodes 40j, 40l, 40n, and 40p and the electrodes 40i, 40k, 40m, and 40o.

The electrodes 40a to 40h have the same shape as each other. That is, the electrodes 40a to 40h have the same thickness, width, and length as each other. Therefore, the sectional areas and lengths of the electrodes 40b, 40d, 40f, and 40h are the same as the sectional areas and lengths of the electrodes 40a, 40c, 40e, and 40g. The electrodes 40i to 40p have the same shape as each other. That is, the electrodes 40i to 40p have the same thickness, width, and length as each other. Therefore, the sectional areas and lengths of the electrodes 40j, 40l, 40n, and 40p are the same as the sectional areas and lengths of the electrodes 40i, 40k, 40m, and 40o.

As described above, in the vibratory gyro element 100 according to this embodiment, the resistance components of the electrodes 40 and the corresponding wirings 70 that are to be interchanged with each other are matched to each other between the switches 170 and the vibrator 20.

### Advantageous Effects of This Embodiment

According to this embodiment, the following advantageous effects are achieved.

According to this embodiment, as described above, the vibratory gyro element 100 includes the vibrator 20, the plurality of electrodes 40 on the vibrator 20, and the plurality of wirings 70 corresponding to the plurality of electrodes 40, and the plurality of electrodes 40 include the primary drive electrode PD to excite the primary vibration in the vibrator 20, the primary detection electrode PPO to detect the primary vibration, the secondary detection electrode SPO to detect the secondary vibration of the vibrator 20, and the secondary drive electrode SD to drive the vibrator 20 to cancel out the secondary vibration. Furthermore, the switches 170 are provided to interchange the primary drive electrode PD and the corresponding wiring 70 and the secondary drive electrode SD and the corresponding wiring 70 with each other, and to interchange the primary detection electrode PPO and the corresponding wiring 70 and the secondary detection electrode SPO and the corresponding wiring 70 with each other, and at least one of the patterns of the wirings 70 or the number of bonding wires 80 provided on the wirings 70 is adjusted such that the resistance components of the electrodes 40 and the corresponding wirings 70 to be interchanged with each other are matched to each other between the switches 170 and the vibrator 20.

With the above configuration, the resistance component of the electrodes 40 that perform each function and the corresponding wiring 70 can be matched before and after interchange, and thus a difference between bias components due to electrical crosstalk corresponding to the resistance components, which are superimposed on the output signals before and after the interchange, can be reduced. Thus, when a difference between the output signals before and after interchange is acquired, the bias component due to electrical crosstalk corresponding to the resistance component can be sufficiently canceled. In addition, the accuracy of detecting the angular velocity can be improved in the gyroscope 101 that includes the vibratory gyro element 100.

According to this embodiment, as described above, the number of bonding wires 80 is made the same for the wirings 70 to be interchanged with each other such that the resistance components of the electrodes 40 and the corresponding wirings 70 to be interchanged with each other are matched to each other between the switches 170 and the vibrator 20. The thicknesses of the bonding wires 80 are different from those of the wirings 70, and thus the resistance values of the bonding wires 80 are also different from those of the wirings 70. Even when the total distances of the wirings 70 are the same, the resistance values may differ depending only on the presence or absence of the bonding wires 80. Therefore, by making the number of bonding wires 80 the same for the wirings 70 to be interchanged with each other as described above, the influence of providing the bonding wires 80 due to the thicknesses can be reduced or prevented, and thus the resistance components of the electrodes 40 and the corresponding wirings 70 to be interchanged with each other can be easily matched to each other.

According to this embodiment, as described above, the lengths of the bonding wires 80 are made the same for the wirings 70 to be interchanged with each other such that the resistance components of the electrodes 40 and the corresponding wirings 70 to be interchanged with each other are matched to each other between the switches 170 and the vibrator 20. Accordingly, the resistance components of the electrodes 40 and the corresponding wirings 70 to be interchanged with each other can be more easily matched to each other.

According to this embodiment, as described above, one bonding wire 80 and another bonding wire 80 are not parallel to each other or are spaced apart from each other. Accordingly, unlike a case in which one bonding wire 80 and another bonding wire 80 are arranged parallel to and close to each other, the occurrence of mutual induction between one bonding wire 80 and another bonding wire 80 can be reduced or prevented, and thus the adverse effect of mutual induction between one bonding wire 80 and another bonding wire 80 on the output signal can be reduced or prevented.

According to this embodiment, as described above, in a configuration in which a plurality of electrodes 40 configured to perform the same function are provided in a plural number on the vibrator 20, the electrodes 40 to be interchanged with each other are provided in equal numbers, two or more, and connected in series by the wirings 70, and the resistance components of the electrodes 40 and the corresponding wirings 70 to be interchanged with each other are matched to each other between the switches 170 and the vibrator 20 to the extent that the electrodes 40 are connected in series. Accordingly, due to the need to route the wiring 70 connecting the plurality of electrodes 40 together, the lengths of the wirings 70 are likely to differ and become complex such that three-dimensional wirings 70 using bonding wires may be required for detouring, or the resistance components may be designed to be different. Therefore, it is highly effective to match the resistance components of the electrodes 40 and the corresponding wirings 70 to be interchanged with each other.

According to this embodiment, as described above, the sectional areas of the wirings 70 to be interchanged with each other are made the same as each other such that the resistance components of the electrodes 40 and the corresponding wirings 70 to be interchanged with each other are matched to each other. Accordingly, by effectively using the fact that the resistance component changes depending on the sectional area of the wiring 70, the resistance components of the electrodes 40 and the corresponding wirings 70 to be interchanged with each other can be easily matched to each other.

According to this embodiment, as described above, the widths of the wirings to be interchanged with each other are made the same as each other such that the sectional areas of the wirings to be interchanged with each other are made the same as each other. Accordingly, by effectively using the fact that the sectional area changes depending on the width of the wiring 70, the sectional areas of the wirings 70 to be interchanged with each other can be easily made the same as each other.

According to this embodiment, as described above, the vibratory gyro element 100 includes the fixed portion 10 and the supports 30 to connect the vibrator 20 to the fixed portion 10 and support the vibrator 20 such that the vibrator 20 is vibratable. The wirings 70 are provided on the fixed portion 10, the electrodes 40 are provided on the vibrator 20 and the supports 30, and the resistance components of the electrodes 40 and the corresponding wirings 70 to be interchanged with each other, which are provided on the vibrator 20, the fixed portion 10, and the supports 30, are matched to each other between the switches 170 and the vibrator 20. Accordingly, the vibrator 20 can be easily vibrated, and the resistance components of the electrodes 40 and the corresponding wirings 70 to be interchanged with each other can be matched to each other.

### Example

With reference to TABLE 1 below, the experimental results (example) of an evaluation of the vibratory gyro element 100 according to this embodiment is now described.

TABLE 1 below shows the measurement results of the resistance components of PD, SD, PPO, and SPO before interchange in a vibratory gyro element 100 according to the example in which the number of bonding wires 80 is made the same for wirings 70 to be interchanged with each other. PD represents resistance components of electrodes 40b, 40d, 40f, and 40h and a wiring 70a. SD represents resistance components of electrodes 40a, 40c, 40e, and 40g and a wiring 70b. PPO represents resistance components of electrodes 40j, 401, 40n, and 40p and a wiring 70c. SPO represents resistance components of electrodes 40i, 40k, 40m, and 40o and a wiring 70d. After interchange, the function of PD is performed by the electrodes 40a, 40c, 40e, and 40g and the wiring 70b. The function of SD is performed by the electrodes 40b, 40d, 40f, and 40h and the wiring 70a. The function of PPO is performed by the electrodes 40i, 40k, 40m, and 40o and the wiring 70d. The function of SPO is performed by the electrodes 40j, 401, 40n, and 40p and the wiring 70c.

**[TABLE 1]**

| | RESISTANCE COMPONENT |
|---|---|
| PD (AFTER INTERCHANGE, SD) | 71.54 Ω |
| SD (AFTER INTERCHANGE, PD) | 72.26 Ω |
| PPO (AFTER INTERCHANGE, SPO) | 72.44 Ω |
| SPO (AFTER INTERCHANGE, PPO) | 72.91 Ω |

As shown in TABLE 1, in the example, the resistance components of PD and SD were almost equal to each other, and the resistance components of PPO and SPO were almost equal to each other. That is, by making the number of bonding wires 80 the same for the wirings 70 to be interchanged with each other, the resistance components of the electrodes 40 and the corresponding wirings 70 to be interchanged with each other could be matched. By matching the resistance components of the electrodes 40 and the corresponding wirings 70 to be interchanged with each other, the resistance component of the electrodes 40 that perform a certain function (PD before interchange and PD after interchange) and the corresponding wiring 70 could be matched before and after interchange. Thus, conceivably, bias components due to electrical crosstalk corresponding to the resistance components, which are superimposed on output signals before and after interchange, can be matched, and when a difference between the output signals before and after interchange is acquired, the bias component due to electrical crosstalk corresponding to the resistance component can be sufficiently canceled.

### Modified Examples

The embodiment disclosed this time must be considered as illustrative in all points and not restrictive. The scope of the present invention is not shown by the above description of the embodiment but by the scope of claims for patent, and all modifications (modified examples) within the meaning and scope equivalent to the scope of claims for patent are further included.

For example, while the example in which the resistance components of the electrodes and the corresponding wirings to be interchanged with each other are matched to each other between the switches and the vibrator by adjusting the wiring patterns and the number of bonding wires provided on the wirings has been shown in the aforementioned embodiment, the present invention is not limited to this. For example, the resistance components of the electrodes and the corresponding wirings to be interchanged with each other may be matched to each other between the switching units and the vibrator by adjusting only the wiring patterns. Alternatively, the resistance components of the electrodes and the corresponding wirings to be interchanged with each other may be matched to each other between the switching units and the vibrator by providing other electrical elements on the wirings to increase or decrease the electrical resistance, instead of the wiring patterns or the number of bonding wires provided on the wirings.

While the example in which the number of bonding wires is made the same (two) for the wirings to be interchanged with each other has been shown in the aforementioned embodiment, the present invention is not limited to this. For example, the resistance components of the electrodes and the corresponding wirings to be interchanged with each other may be matched to each other between the switching units and the vibrator by differentiating the number of bonding wires between the wirings to be interchanged with each other. When the number of bonding wires is made the same for the wirings to be interchanged with each other, the number of bonding wires may be 0, 1, or 3 or more. In other words, the number of bonding wires may be 0.

While the example in which the bonding wires of the wirings to be interchanged with each other have the same length has been shown in the aforementioned embodiment, the present invention is not limited to this. For example, the bonding wires of the wirings to be interchanged with each other may have different lengths.

While the example in which all bonding wires have the same length has been shown in the aforementioned embodiment, the present invention is not limited to this. For example, the lengths of all bonding wires may not be the same. Alternatively, for example, the lengths of bonding wires of wirings to be interchanged with each other may be the same as each other, while the lengths of the bonding wires of the wirings to be interchanged with each other may be different from the lengths of bonding wires of other wirings to be interchanged with each other. Furthermore, for example, one of the wirings to be interchanged with each other may include one bonding wire that is twice as long as that of the other of the wirings to be interchanged with each other, and the other of the wirings to be interchanged with each other may include two bonding wires, such that the lengths of the bonding wires of both of the wirings to be interchanged with each other are made the same as each other.

While the example in which one bonding wire and another bonding wire are not arranged parallel to each other and are spaced apart from each other has been shown in the aforementioned embodiment, the present invention is not limited to this. For example, one bonding wire and another bonding wire sufficiently spaced apart from the one bonding wire may be arranged parallel to each other.

While the example in which all of the plurality of primary drive electrodes, all of the plurality of primary detection electrodes, all of the plurality of secondary drive electrodes, and all of the plurality of secondary detection electrodes are connected in series has been shown in the aforementioned embodiment, in this case, it is sufficient that the resistance components are matched as a whole when the electrodes are connected in series, and it is not necessary for the resistance components to be matched between the electrodes. This is because, when the vibratory gyro element is viewed as an element to be connected to the circuit on the substrate side, the resistance components of the electrodes connected in series contribute as a whole, and even when the breakdowns of the resistance components vary between the electrodes, the circuits are equivalent. Unlike the above embodiment, when the plurality of primary drive electrodes, the plurality of primary detection electrodes, the plurality of secondary drive electrodes, and the plurality of secondary detection electrodes are divided into several sections (two sections, for example) and the divided sections are separately connected to independent circuits on the substrate side, it is preferable to match the resistance components of each section to those of another section to be interchanged therewith.

While the example in which the primary drive electrodes, the primary detection electrodes, the secondary drive electrodes, and the secondary detection electrodes are each arranged in four orientations has been shown in the aforementioned embodiment, the present invention is not limited to this. For example, the primary drive electrodes, the primary detection electrodes, the secondary drive electrodes, and the secondary detection electrodes may each be arranged in two orientations.

While the example in which the primary vibration in the cos 2θ mode is excited in the vibrator has been shown in the aforementioned embodiment, the present invention is not limited to this. For example, a primary vibration in a cos Nθ mode (N is a natural number equal to or greater than 2) may be excited in the vibrator. In such a case, the supports and the electrodes are provided in 4N orientations arranged at equal angular intervals in the circumferential direction of the vibrator.

While the example in which the vibrator is annular has been shown in the aforementioned embodiment, the present invention is not limited to this. For example, the vibrator may have a ring shape, such as a regular polygon. Alternatively, the vibrator may be disk-shaped or hemispherical, for example. There is no limitation on the shape of the vibrator as long as the electrodes of the vibrator and the wirings are interchanged. When the vibrator is hemispherical, the electrodes on the vibrator are arranged on the curved surface of the hemisphere or on the flat surface of the bottom.

The shapes of the supports shown in the aforementioned embodiment are merely examples, and the present invention is not limited to these. As long as there is no or small effect on an increase or decrease in the resistance components of the electrodes and the corresponding wirings to be interchanged with each other, other electrical elements may be provided between the switching units and the vibrator for the purpose of performing functions unrelated to the present invention. In such a case, different electrical elements may be provided for the electrodes and the corresponding wirings to be interchanged with each other. Furthermore, when the effects before and after interchange can be offset by providing electrical elements having similar configurations for the electrodes and the corresponding wirings to be interchanged with each other, other electrical elements may be provided between the switching units and the vibrator even when the effects on the resistance components are large.

While the example in which the primary drive electrodes are interchanged with the secondary drive electrodes and the primary detection electrodes are interchanged with the secondary detection electrodes has been shown in the aforementioned embodiment, the present invention is not limited to this. For example, the primary drive electrodes may be interchanged with the secondary detection electrodes, and the primary detection electrodes may be interchanged with the secondary drive electrodes.

While the example in which two electrodes are provided in parallel to each other on the support and the vibrator has been shown in the aforementioned embodiment, the present invention is not limited to this. For example, three or more electrodes may be provided in parallel to each other on the support and the vibrator. That is, the number of rows of electrodes may be three or more. The supports may include a dummy support with no electrodes. Depending on the form of the vibrator, a single support may be provided. The supports themselves may not be present. In such a case, too, the same advantageous effects as those of the aforementioned embodiment can be achieved by matching the resistance components to be interchanged with each other by measures such as the wiring patterns after the switching units, the number of bonding wires provided on the wirings, or the installation of other electrical elements.

The shape of the fixed portion shown in the aforementioned embodiment is merely an example, and the present invention is not limited to this. The shape of the fixed portion is not limited to a square, and the center of the fixed portion does not need to coincide with the center of the vibrator. Furthermore, the angles of the supports, the angle of the fixed portion, and the angles of the electrodes on the vibrator relative to the center of the vibrator are not limited.

In the aforementioned embodiment, the electrodes on the vibrator surface are electrically connected by providing the wirings and the electrodes on the surfaces of the fixed portion and the supports, but the electrodes on the vibrator may be electrically connected by wiring to a member other than the fixed portion and the supports. In such a case, too, the same advantageous effects as those of the aforementioned embodiment can be achieved by matching the resistance components to be interchanged with each other by measures such as the wiring patterns between the switching units and the vibrator, the number of bonding wires provided on the wirings, or the installation of other electrical elements.

While the example in which one switch is provided as the switching unit for each of the primary drive electrodes, the secondary drive electrodes, the primary detection electrodes, and the secondary detection electrodes has been shown in the aforementioned embodiment, the present invention is not limited to this. For example, switches may be provided on the inlet side and the outlet side as the switching unit for interchanging the electrodes and the corresponding wiring. In such a case, the resistance components of the electrodes and the corresponding wirings to be interchanged with each other are matched to each other between the inlet-side switches and the outlet-side switches. This allows the resistance components to be matched between the inlet-side switches and the outlet-side switches, and thus the bias component due to electrical crosstalk corresponding to the resistance component can be sufficiently canceled.

### Description of Reference Numerals

10: fixed portion
20: vibrator
30: support
40, 40a to 40p: electrode
70, 70a to 70d: wiring
80, 80a to 80h: bonding wire
100: vibratory gyro element
101: gyroscope
150: calculator
PD: primary drive electrode
SD: secondary drive electrode
PPO: primary detection electrode
SPO: secondary detection electrode

## Claims

1. A vibratory gyro element comprising:
a vibrator;
a plurality of electrodes on the vibrator; and
a plurality of wirings corresponding to the plurality of electrodes; wherein
the plurality of electrodes include:
a primary drive electrode to excite a primary vibration in the vibrator;
a primary detection electrode to detect the primary vibration;
a secondary detection electrode to detect a secondary vibration of the vibrator; and
a secondary drive electrode to drive the vibrator to cancel out the secondary vibration;
switching units are provided to interchange the primary drive electrode and a corresponding wiring and the secondary drive electrode and a corresponding wiring or the secondary detection electrode and a corresponding wiring with each other, and to interchange the primary detection electrode and a corresponding wiring and the secondary detection electrode and the corresponding wiring or the secondary drive electrode and the corresponding wiring with each other; and
at least one of patterns of the wirings, a number of bonding wires provided on the wirings, or another electrical element that increases or decreases electrical resistance is adjusted such that resistance components of the electrodes and the corresponding wirings to be interchanged with each other are matched to each other between the switching units and the vibrator.

2. The vibratory gyro element according to claim 1, wherein the number of bonding wires is made same for the wirings to be interchanged with each other such that the resistance components of the electrodes and the corresponding wirings to be interchanged with each other are matched to each other between the switching units and the vibrator.

3. The vibratory gyro element according to claim 2, wherein lengths of the bonding wires are made same for the wirings to be interchanged with each other such that the resistance components of the electrodes and the corresponding wirings to be interchanged with each other are matched to each other between the switching units and the vibrator.

4. The vibratory gyro element according to claim 2, wherein one of the bonding wires and the other of the bonding wires are not parallel to each other or are spaced apart from each other.

5. The vibratory gyro element according to claim 1, wherein
switches are provided on an inlet side and an outlet side as the switching unit configured to interchange each of the electrodes and the corresponding wiring; and
the resistance components of the electrodes and the corresponding wirings to be interchanged with each other are matched to each other between the switches on the inlet side and the outlet side.

6. The vibratory gyro element according to claim 1, wherein
in a configuration in which a plurality of electrodes configured to perform a same function are provided in a plural number on the vibrator, the electrodes to be interchanged with each other are provided in equal numbers, two or more, and connected in series by the wirings; and
the resistance components of the electrodes and the corresponding wirings to be interchanged with each other are matched to each other between the switching units and the vibrator to the extent that the electrodes are connected in series.

7. The vibratory gyro element according to claim 1, wherein sectional areas of the wirings to be interchanged with each other are made same as each other such that the resistance components of the electrodes and the corresponding wirings to be interchanged with each other are matched to each other between the switching units and the vibrator.

8. The vibratory gyro element according to claim 7, wherein widths of the wirings to be interchanged with each other are made same as each other such that the sectional areas of the wirings to be interchanged with each other are made same as each other.

9. The vibratory gyro element according to claim 1, further comprising:
a fixed portion; and
a support to connect the vibrator to the fixed portion and support the vibrator such that the vibrator is vibratable; wherein
the wirings are provided on the fixed portion;
the electrodes are provided on the vibrator and the support; and
the resistance components of the electrodes and the corresponding wirings to be interchanged with each other, which are provided on the vibrator, the fixed portion, and the support, are matched to each other between the switching units and the vibrator.

10. A gyroscope comprising:
a vibratory gyro element; and
a calculator to calculate an angular velocity based on an output signal from the vibratory gyro element; wherein
the vibratory gyro element includes:
a vibrator;
a plurality of electrodes on the vibrator; and
a plurality of wirings corresponding to the plurality of electrodes;
the plurality of electrodes include:
a primary drive electrode to excite a primary vibration in the vibrator;
a primary detection electrode to detect the primary vibration;
a secondary detection electrode to detect a secondary vibration of the vibrator; and
a secondary drive electrode to drive the vibrator to cancel out the secondary vibration;
switching units are provided to interchange the primary drive electrode and a corresponding wiring and the secondary drive electrode and a corresponding wiring or the secondary detection electrode and a corresponding wiring with each other, and to interchange the primary detection electrode and a corresponding wiring and the secondary detection electrode and the corresponding wiring or the secondary drive electrode and the corresponding wiring; and
at least one of patterns of the wirings, a number of bonding wires provided on the wirings, or another electrical element that increases or decreases electrical resistance is adjusted such that resistance components of the electrodes and the corresponding wirings to be interchanged with each other are matched to each other between the switching units and the vibrator.
